# EUROPEAN PATENT SPECIFICATION

(11) **EP 0 582 569 B1**
(45) Date of publication and mention of the grant of the patent: **17.06.1998**
(21) Application number: 91917151.2
(22) Date of filing: 24.09.1991
(51) Int. Cl.: B32B 5/26, D04H 5/00, D04H 13/00

(54) **ELASTICIZED FABRIC WITH CONTINUOUS FILAMENTS AND METHOD OF FORMING**
ELASTISCHES GEWEBE MIT ENDLOSFÄDEN UND VERFAHREN ZUR HERSTELLUNG
TISSU ELASTIFIE A FILAMENTS CONTINUS ET PROCEDE DE FABRICATION

(30) Priority: 20.03.1991 US 672541
(43) Date of publication of application: 16.02.1994
(73) Proprietor: Sabee, Reinhardt Nils, Appleton Wisconsin 54911 (US)
(72) Inventor: Sabee, Reinhardt Nils, Appleton Wisconsin 54911 (US)
(74) Representative: Adams, William Gordon
(86) International application number: US9106925
(87) International publication number: WO9216366

(56) References cited:
- EP-A- 0 239 080
- WO-A-90/03464
- DE-A- 3 734 963
- US-A- 3 912 567
- US-A- 3 949 130
- US-A- 4 013 816
- US-A- 4 209 563
- US-A- 4 605 458
- US-A- 4 606 964
- US-A- 4 652 487
- US-A- 4 657 802
- US-A- 4 692 368
- US-A- 4 720 415
- US-A- 4 801 482
- US-A- 4 863 779

## Description

### Background of the Invention

This invention relates to an improved process and apparatus for preparing non-woven elasticized fabrics, and in particularly to such a process and apparatus in which thermal and oxidative degradation are reduced substantially and wherein the web and fiber separation upon the application of a stretching force is reduced.

There has been a great need for a less critical process to produce elasticized webs having an improved quality and a predetermined controlled porosity for water repellency, breatheability and drapability at a lower cost than has been heretofore available. There is also a great need for a process which does not degrade the elastomeric polymers to as great an extent as that which occurs in the melt blown or spray spun process during the formation of fibers or filaments, in order that lower cost elastomers may be utilized.

It has been known for some time that thermoplastic elastomeric polymers (TPE polymers) were considered too unstable for direct use at the high die and air temperatures required to produce melt blown elastomeric fibrous webs. Because high die and attenuating air temperatures are necessary to obtain viscosities required for good fiber formation or attenuation, and since large volumes of hot air are used for the fiber forming phase, the TPE polymer is subjected to both thermal and oxidative degradations which are a major cause or problem incurred in the melt blowing of TPE resins. Some types of elastomeric polymers lose their elasticity completely, while others which have been processed with viscosity reducing agents lose a portion of their elasticity. Those latter polymers include low density, low molecular weight polyethylene such as USI's petrothene Na601 resin, and polypropylene such as Himont's PC 973. Some systems employ poly (alphamethylstyrene) materials such as Amoco 18-210, which allow extrusion at lower temperatures, whereby they retain varying amounts of their elastomeric properties. However, these blends, mixtures or premixed blends of polymers all suffer degradation to a certain extent.

Much work has also been done on various chemical systems in the initial resin material. These elastic polymers are called "block polymers", since the monomers involved are put together in separate blocks instead of single units. Some of the work related to block polymers is referred to the corresponding published Application, EP 0582569 A1 (WO 9216366 A1).

WO-A-90 03464 discloses a process of producing composite elastic material comprising the steps of tensioning a neckable material and joining an elastic sheet to the tensioned material. US-A-4 801 482 discloses a pad formed from an elastic nonwoven joined to a nonelastic nonwoven, this latest being gathered between the points of junction.

US-A-4 863 779 relates to a composite material in which one elastic web is joined at spaced.apart locations to at least one gatherable web.

### Summary of the Invention

The invention relates to a process for producing an elasticized fabric, and the fabric produced by that process.

According to the invention there is provided a process for producing an elasticized fabric comprising elastomeric continuous filaments, said process characterized by the steps of:
a. forming one or more arrays of continuous filaments in a substantially predetermined non-random orientation, at least some of said filaments being relatively elastomeric and some of said filaments being elongatable but relatively non-elastic;
b. forming one or more fibrous webs of melt-blown fibers;
c. joining together said elastomeric filaments, and said one or more fibrous webs, thereby stabilizing said filaments in their predetermined laydown orientation to form a stabilized web;
d. elongating said stabilizing web, thereby stretching said elastomeric filaments, and molecularly orienting at least a portion of the fibers of said fibrous web, thereby forming a tensioned, elongated, elasticized fabric; and
e. relaxing said tensioned, elongated, elasticized fabric, thereby forming a gathered, elasticized fabric.

Further, according to the invention there is provided a non-woven, gathered, elasticised fabric characterized by:
a multiplicity of continuous non-random laid filaments at least partially of an elastomeric polymer, oriented substantially longitudinally and partially of non-elastic but elongatable polymer, said non-elastic filaments having curls and undulations
a multiplicity of melt blown fibers deposited on said longitudinal continuous filaments, said melt blown fibers forming bonds at least at some of their intersections with said longitudinal filaments to thereby stabilize and fix said longitudinal filaments in the substantially longitudinal orientation to form a stabilized web having wrinkles or gathers formed therein; and
at least one prefabricated web joined to said stabilized web.

In one embodiment the elastomeric continuous filaments are under tension and the non-elastic filaments are molecularly oriented. The two arrays are laid onto a first accumulating roll having a first peripheral velocity. A melt blown fibrous layer is deposited onto one side of the array of elastomeric filaments, thereby stabilizing the elastomeric filaments in their predetermined laydown orientation. Next the stabilized web is elongated between the first accumulating roll and a second adjacent accumulating roll having a second peripheral velocity greater than the peripheral velocity of the first roll, thereby stretching the elastomeric filaments. This further molecularly orients the non-elastic filaments and molecularly orients at least some fibers comprising the melt blown fibrous layer.
Thus is formed a tensioned elasticized web. A layer of adhesive fibers is deposited onto the other side of the tensioned elasticized web while simultaneously depositing a second fibrous web onto the layer of adhesive fibers. This forms a tensioned, coherent, unified elasticized fabric. The tensioned, coherent, unified elasticized fabric is then fed through a pair of temperature controlled thermal pin bonding rolls having projecting pins which further bond the stretched elasticized fabric with autogenous bonds. Finally, the tensioned elasticized fabric is relaxed, thereby forming corrugations, wrinkles or gathers in the melt blown fibrous webs.

An alternative embodiment calls for forming one or more arrays of relatively elastomeric continuous filaments and one or more arrays of elongatable but relatively non-elastic continuous filaments wherein the elastomeric continuous filaments are under tension and wherein the non-elastic filaments are molecularly oriented, while simultaneously depositing one or more fibrous layers of melt blown polymeric fibers onto one or more temperature controlled accumulating surfaces. In this embodiment at least one fibrous layer of adhesive fibers is deposited onto at least one side of the elastomeric filaments and the non-elastic continuous filaments while simultaneously feeding one or more melt blown fibrous webs, along with the elastomeric filaments and the non-elastic filaments, between a pair of pressurized temperature controlled squeeze rolls. This has the effect of joining the melt blown fibrous webs, the elastomeric filaments and the non-elastic filaments to form a tensioned coherent unified elasticized fabric. The unified fabric is then relaxed as indicated above to form corrugations, wrinkles or gathers in the melt blown fibrous web and kinks, curls and undulations in the non-elastic filaments.

In another embodiment, one or more arrays of relatively elastomeric continuous filaments are formed, without being subjected to tension while forming. A melt blown fibrous layer is deposited onto an accumulating surface. A melt blown layer of adhesive fibers is deposited onto at least one side of the elastomeric filaments to stabilize the laydown orientation. The melt blown fibrous web and the stabilized elastomeric filaments are fed between a pair of pressurized temperature controlled squeeze rolls, thereby joining the melt blown fibrous web and the elastomeric filaments, and forming a coherent elasticized unified fabric. The unified fabric incrementally drawn and elongated, stretching the elastomeric filaments and molecularly orienting the fibers of the melt blown fibrous web. The stretched unified elasticized fabric is then pin-bonded and relaxed as described above.

Other alternatives are available including feeding the tensioned elastomeric filaments and the non-elastic filaments, together with a melt blown polymeric fibrous layer, into the nip of two oppositely rotating accumulating rolls, thereby joining all three to form a tensioned coherent unified elasticized fabric. Alternatively the elasticized fabric may be elongated through two or more differential velocity draw or stretch rolls thereby stretching the elastomeric continuous filaments, and molecularly orienting at least a portion of the fibers of the melt blown fibrous web.

In one embodiment the fibrous layer of adhesive fibers is deposited onto one side of the elastomeric continuous filaments, one side of the non-elastic continuous filaments, one side of a melt blown fibrous web, and into the nip of a pair of temperature controlled nip rolls.

Yet another alternative embodiment calls for forming an array of elastomeric filaments under tension while simultaneously depositing first and second fibrous layers of melt blown polymeric fibers onto first and second accumulating surfaces. A fibrous layer of adhesive fibers is deposited onto at least one side of the tensioned elastomeric continuous filaments, while simultaneously depositing a fibrous layer of adhesive fibers onto the melt blown fibrous layer and into the nip of the first and second counter rotating accumulator rolls thereby joining the first and second melt blown fibrous layers to the tensioned elastomeric filaments to form a tensioned coherent unified elasticized fabric. The elasticized fabric is elongated through two or more differential velocity draw or stretch rolls thereby additionally stretching the elastomeric filaments, and molecularly orienting at least a portion of the fibers comprising the first and second fibrous layers of melt blown polymeric fibers. The tensioned elasticized fabric is then pin-bonded and relaxed as described above.

Other objects and advantages of the invention will become apparent hereinafter.

### Description of the Drawing

Fig. 1 is a side view, shown somewhat schematically, of an apparatus constructed to practice one embodiment of the method of the invention.

Fig. 2 is a side view, also shown somewhat schematically, of an apparatus constructed to practice a modified embodiment of the method of the invention shown in Fig. 1.

Fig. 3 is a side view, also shown somewhat schematically, of an apparatus constructed to practice an alternative embodiment of the method of the invention.

Fig. 4 is a side view, shown somewhat schematically, of an apparatus constructed to practice a modified embodiment of the method of the invention shown in Fig. 3.

Fig. 5 is a side view, shown schematically, of an apparatus constructed to practice another alternative embodiment of the method of the invention.

Fig. 6 is a side view, also shown schematically, of an apparatus constructed to practice a modified embodiment of the method of the invention shown in Fig. 5.

Fig. 7 is a side view, also shown schematically, of an apparatus constructed to practice another modification of the embodiment of the method of the invention shown in Fig. 5.

### Description of the Preferred Embodiment

As used hereinafter, the term "deposit" refers to a deposition of melt blown or sprayed adhesive fibers includes the offset method of transferring a layer of fibrous adhesive from one surface to another.

The term "stabilized" as used herein refers to the stabilizing of an "array" or "filamentary curtain" of melt spun polymeric continuous filaments in a substantially predetermined lineal orientation with a deposition of melt blown or sprayed polymeric fibers or filaments including adhesives of all sprayable types, and which may be deposited onto those continuous filaments. Methods can be used, such as direct deposition onto unsupported areas of continuous filaments between idler rolls, or onto continuous filaments supported on an accumulating surface, which may be foraminous, such as a stationary surface, roll, belt, or a web of any type. The melt blown fibers and filaments also may be first deposited onto the non-stick surface of a roll, web, or belt and subsequently transferred onto the continuous filaments by contact.

The terms "melt blowing and "melt spraying" are herein used interchangeably and defined as the process where thermoplastic polymers are fed through one or more rows of spinnerets or spray nozzles forming molten streams which are then attenuated and fiberized with heated, pressurized air or gas streams. The heated, pressurized air or gas streams elongate or attenuate the molten extrudate, thereby forming fibers and or continuous filaments varying diameters from 0.2 microns or less to diameters of more than 1000 microns, and having lengths ranging from less than about 1/8" to continuous filaments having extreme lengths. The air or gas temperatures may range from over 900°F to less than 225°F at the spinneret or spray nozzles depending upon the melt flow rate or the required degradation rate of the thermoplastic polymer or the melt temperature of the hot melt adhesive.

The term "melt spun" as used herein is defined as the process wherein continuous filaments are prepared by simultaneously spinning a multiple number of continuous filaments of a synthetic polymer such as polypropylene through a multiple number of spinning nozzles or spinnerets, preferably extending in one or more rows. The filaments are drawn pneumatically or mechanically from the spinneret and enter a travel zone which may be confined inside a covered chamber or chimney so as to introduce cooled, ambient, or heated air or other gas at a controlled temperature as required for draw processing or at least partially solidifying the filaments.

The terms "draw", "drawn", "drawable", "molecularly drawable", and "molecularly oriented" refer to the process which takes place when an unoriented crystalline polymer is subjected to an external stress. That is, it undergoes a rearrangement of the crystalline material wherein it appears that the polymer chains align in the direction of the applied stress at which time the physical properties of the sample change markedly.

The terms "filament", "longitudinal filament", "continuous filament", and "melt spun filament" are herein used interchangeably and are defined for the purposes hereof as melt spun continuous filaments which have not been intentionally broken or cut, and are not limited as to size or shape.

The terms "elastic" and "elasticized" are herein used interchangeably and are used to describe articles which have been made stretchable and contractible with the use of elastomeric materials in their preparation. These articles may be prepared wholly from elastomeric materials or may be comprised of elastomeric materials combined with relatively nonelastic materials.

The continuous filaments referred to herein are prepared by simultaneously spinning a multiple number of continuous filaments of a synthetic polymer such as a polypropylene or an elastomeric polymer through a multiple number of spinning nozzles or spinnerets, preferably extending in one or more rows. Upon exiting the spinnerets the filaments enter a controlled temperature chamber and are drawn away from the spinneret orifice at a greater rate than the rate of extrusion. Thus is effected a substantial draw down of the filaments in the molten state prior to solidification thereof. The solidified filaments having a low degree of molecular orientation are then subjected to a mechanical draw down with draw rolls under closely controlled temperature and velocity conditions thereby imparting a much higher degree of molecular orientation to the continuous filaments.

The melt blowing of adhesive fibers is performed by the same technique as in the above-identified article by Wente. The fibers have diameters ranging from less than 0.5 microns to more than about 250 microns. These adhesive fibers are made by extruding a molten thermoplastic adhesive material through a plurality of fine die capillaries as a molten extrudate of filaments into a high velocity gas stream which attenuates the filaments of molten adhesive material to reduce their diameter to the above stated range in the formation of microfibers or filaments. Any fiberizable hot melt adhesive material is suitable in the formation of adhesive fibers to be used in the intermingling and the joining of stratified fibrous fabrics. Elastomeric adhesives, pressure sensitive adhesives, pressure sensitive hot melts, viscoelastic hot melts, self-adhering elastic materials and conventional hot melt adhesives are some of the adhesives suitable for forming adhesive fibers. It is to be understood, however, that the present invention is not to be limited to these specific adhesives.

As has been previously stated, the melt blown adhesive fibers do not stiffen the fibrous stratified fabrics as do the roller applied or coated adhesives. These latter adhesives often fill crevices and interstices between the fibers of the fibrous layer or web and, after solidification, bind groups of fibers together, which stiffens the fibrous layer and has a deleterious effect on the hand and drape. The melt blown adhesive fibers on the other hand act as do the fibers of the layered fibrous web and not as sprays such as paint sprays, wherein small droplets of paint are emitted from a gun. The melt blown fibers, being flexible and of small diameter, are turbulently entangled with the fibrous web fibers and form bonds at their intersections with these fibers. These intersectional adhesive bonds behave similarly to fusion bonds with no noticeable stiffness of the composite fabric. They also provide the additional feature that the elastomeric adhesive fibers stretch or elongate under stress.

Other materials for use in forming indepth, joined, stratified webs such as those disclosed here are polyolefins such as polypropylene, polyethylene, polybutane, polymethyldentene, ethylenepropylene copolymers; polyamides such as polyhexamethylene adipamide, poly-(oc-caproamide), polyhexamethylene sebacamide, polyvinyls such as polystyrene, thermoplastic elastomers such as polyurethanes, other thermoplastic polymers such as polytrifluorochloroethylene and mixtures thereof; as well as mixtures of these thermoplastic polymers and co-polymers; ethylene vinyl acetate polymers, synthetic polymers comprising 40% or more of polyurethane; polyetheresters; polyetherurethane; polyamide elastomeric materials; and polyester elastomeric materials S-EB-S Kraton "G" Block co-polymers and Kraton GX 1657 Block co-polymers as furnished by Shell Chemical Company; polyester elastomeric materials under the trade name "Hytrel" from the Dupont Company; polyurethane elastomeric materials under the trade name "Estane" from B. F. Goodrich and Company and polyamide elastoceric material under the trade name "Pebax" from Rilsam Company, including co-polymers, blends or various formulations thereof with other materials. Also included are viscoelastic hot melt pressure sensitive adhesives such as "Fullastic" supplied by H.B. Fuller and Company and other hot melt adhesives including pressure sensitive adhesives. Any of the fiber forming thermoplastic polymers including fiber forming hot melt adhesives, pressure sensitive adhesives, and viscoelastic hot melt pressure sensitive adhesives can be used for stabilizing the web or bonding the stabilized web to one or more cellulose webs, wood pulp webs, melt blown fibrous mats, or for laminating and bonding two or more stabilized webs to from laminates. The instant invention is not limited by the above polymers, for any thermoplastic polymer, co-polymer or mixture thereof capable of being melt blown into fibers or filaments is suitable. Any of the thermoplastic elastomers which are capable of being melt blown or melt spun are suitable for the manufacture of stretchable fabrics.

Unless the context requires otherwise, the continuous filaments used herein to form a curtain of continuous filaments can be of many materials, natural or manmade, ranging from textile threads or yarns composed of cotton, rayon, hemp, etc. to thermoplastic polymers. This invention is not limited to the use of any particular fiber, but can take advantage of many properties of different fibers. A curtain of continuous filaments or threads using multifilament threads of rayon or nylon is readily stabilized by depositing a layer of molten melt blown fibers or filaments on this continuous filamentary web. Upon cooling, the molten melt blown filaments become tacky and self-bond to the continuous rayon or nylon threads.

In the preferred embodiments, thermoplastic melt spun continuous filaments are used which involve continuously extruding a thermoplastic polymer through a spinneret thereby forming a curtain of individual filaments. Among the many thermoplastic polymers suitable for the continuous filaments are polyolefins such as polyethylene and polypropylene; polyamides, polyesters such as polyethylene terepthalate; thermoplastic elastomers such as polyurethanes; thermoplastic co-polymers; mixtures of thermoplastic polymers; co-polymers and mixtures of co-polymers; as well as the previously listed materials used herein for the melt blown fibers and filaments. However, the present invention is not limited to these materials, for any melt spinnable polymer is suitable, including all adhesive materials and spun bonded materials listed herein, and melt blown materials. Other spinnable thermoplastic elastomers which are suitable for stretchable fabrics include but are not limited to polyester based polyurethane, and polyester type polyurethane polymeric fiber forming elastomers such as Texin 480A supplied by Mobay Chemical Company.

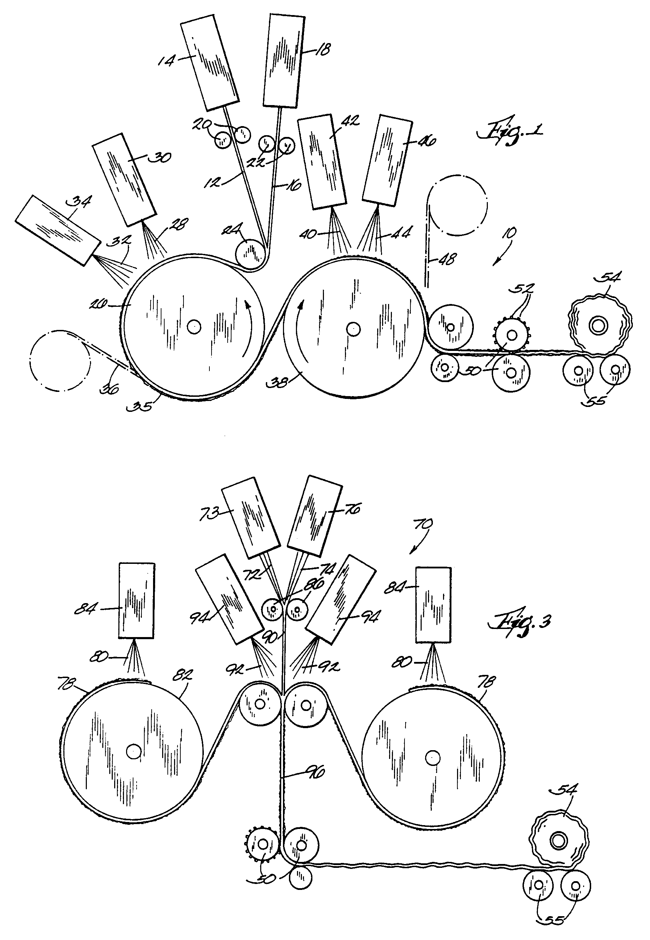

Referring now to Fig. 1, there is shown an apparatus 10 for practicing the invention according to a preferred embodiment of the method of the invention. According to this embodiment, the process for producing an elasticized fabric includes the forming of one or more arrays 12 of elastomeric continuous filaments from an elastomeric melt spun extrusion die 14 and at the same time forming one or more arrays 16 of elongatable but relatively non-elastic continuous filaments from a non-elastic polymer melt spun extrusion die 18. In this embodiment, both the elastomeric filaments 12 and the non-elastic filaments 16 are separately passed through respective sets of temperature controlled feed rolls 20 and 22 and maintained under tension. This has the effect of molecularly orienting the non-elastic filaments of array 16. From the feed rolls 20 and 22, the elastomeric filaments 12 and the non-elastic filaments 16 are joined together at a dancer roll 24 which assists in maintaining tension on both sets of filaments. From the dancer roll 24, both sets of filaments then pass around a first accumulating roll 26 which rotates at a predetermined first peripheral velocity. While the elastic filaments 12 and non-elastic filaments 16 are on the accumulating roll 26, melt blown adhesive fibers 28, from a melt blown adhesive die 30 are applied to the outer surface of the filaments. At least one layer of melt blown fibers 32 is then deposited onto the adhesive fibers 28, by a melt blown fiber die 34. This deposit has the effect of stabilizing the elastomeric filaments in their predetermined laydown orientation, producing a stabilized web 35. Optionally, a prefabricated web 36 may be applied over the melt blown fibrous layer formed by fibers 32. The prefabricated web 36 may be any suitable prefabricated web including but not limited to dry or wet laid webs, spun bonded webs, melt blown webs, air laid webs, hydroentangled webs, film, spun laced webs, fibrillated films, needle punched webs, high loft fabrics, and stabilized, non-random laid, continuous filament webs as described in Sabee '064.

This stabilized web 35 then approaches a second adjacent accumulating roll 38 which is rotating at a second peripheral velocity greater than the peripheral velocity of the first accumulating roll 26. This difference in velocities has the effect of stretching the stabilized web 35, further molecularly orienting the non-elastic filaments 16 of the web and molecularly orienting at least some of the fibers 32 comprising the melt blown fibrous layer, thus forming an elongated elasticized web.

At that point, with the web wrapping around a second accumulating roll 38 in the opposite direction, the opposite side of the web is exposed. Adhesive fibers 40 from a melt blown adhesive die 42 and a layer of melt blown polymeric fibers 44 from a melt blown fiber die 46 are deposited onto the web. Optionally, again, a prefabricated web 48, of any of the materials listed above in connection with prefabricated web 36, may be applied over the second fibrous layer 44. The resulting elongated elasticized fabric is then fed through a pair of temperature controlled thermal pin bonding rolls 50 having projecting pins 52 which further bond the fabric with autogenous bonds. Thereafter, the fabric is relaxed, which permits the formation of corrugations, wrinkles or gathers in the web, as shown in the drawing figure. This "gathered" web is accumulated on a final roll 54, such as by means of a two-drum winder 55, for a later distribution or use elsewhere.

The embodiment of the method being performed in Fig. 2 is similar, with a few slight modifications. In particular, only an array of elastomeric filaments 12 from an elastomeric melt blown extrusion die 14 are being formed at the beginning. This array of elastomeric filaments passes through a set of feed rolls 20, similar to the method shown in Fig. 1. As there shown, these feed rolls 20, in combination with other smaller rolls 56, 58 and 60 downstream, exert a tension on the elastomeric filaments 12. Optionally, a prefabricated web 62, of any of the materials listed above in connection with prefabricated web 36, may be applied to the elastomeric filaments 12 by means of melt blown adhesive 64 from a melt blown adhesive die 66. As can be seen from Fig. 2, the elastomeric filaments then pass around an accumulating roll 68, held against that roll by rolls 56 and 58, referred to above. As the filament array 12 passes around roll 68, the fibrous layer of adhesive fibers 28 from the melt blown adhesive die 30, and the fibrous web of polymeric fibers 32 from the melt blown fiber die 34, are applied to the outer side of the elastomeric filaments 12. Thereafter, as indicated in connection with Fig. 1, the resulting fabric is pin bonded and relaxed, thereby forming corrugations, wrinkles or gathers in the fabric, as the fabric is accumulated by the two-drum winder 55 at final roll 54.

Referring now to Fig. 3, there is shown apparatus 70 for practicing a different embodiment of the method of the invention. As can be seen in that figure, an array 72 of continuous relatively elastomeric filaments is formed by an extrusion die 73, and an array 74 of elongatable relatively non-elastic continuous filaments are formed by an extrusion die 76. At the same time, a fibrous layer 78 of melt blown polymeric fibers 80 is being deposited onto the temperature controlled surface of one or both of two accumulator rolls 82 by melt blown fiber dies 84. After formation of the elastic filaments 72 and non-elastic filaments 74, both sets of filaments are passed together between a set of chilled feed rolls 86 and into the nip of a pair of chilled squeeze rolls 88. At the same time, the fibrous layers 78 of melt blown polymeric fibers 80 are also fed into the same nip. If two such layers are provided, one is fed into the nip on each side of the filamentary curtain 90 formed by the combination of the elastic filaments 72 and non-elastic filaments 74. Just before the fibrous layers 78 are joined to the filamentary curtain 90, a fibrous layer of melt blown adhesive fibers 92 is applied both to the filamentary curtain 90 and to the side of the layers 88 which will eventually be facing toward the filamentary curtain 90, by means of melt blown adhesive dies 94. Thereafter, the assembled fabric 96 is pin bonded by pin bonding rolls 50 and relaxed to permit the formation of corrugations, wrinkles or gathers in the fabric and kinks, curls and undulations in the non-elastic continuous filaments, as the fabric is accumulated about final roll 54 on the two-drum winder 55.

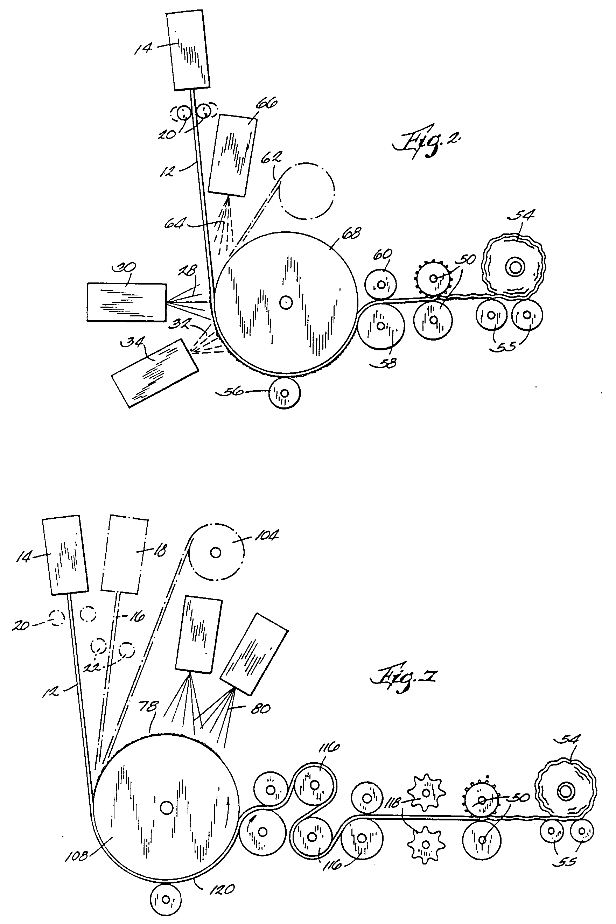

Fig. 4 shows an apparatus for practicing a method only slightly modified from that described above in connection with Fig. 3. The optional addition of prefabricated webs 36, 48 are provided for, as was the case in the apparatus shown in Fig. 1. More important, the fabric 96, though formed in basically the same way as described above in connection with Fig. 3, is not subjected to tension prior to pin bonding at rolls 50. Rather, it is relaxed at first, and subjected to tension by draw rolls 98 only after the pin bonding step. These draw rolls 98 have the effect of incrementally drawing and elongating the unified fabric 96, thereby stretching the elastomeric filaments 72 and elongating and molecularly orienting at least some of the fibers 80 of the fibrous layers 78. At least a portion of this incremental elongation is provided by a pair of incremental elongation rolls 100. Thereafter, the fabric is again subjected to pin bonding, such as by rolls 50a, and relaxation so as to result in corrugations, wrinkles or gathers in the melt blown fibrous layers 78 and kinks, curls, undulations or corrugations in the non-elastic continuous filaments 74, as the fabric is accumulated about final roll 54 on two-drum winder 55. Note that the pins of pin bonding rolls 50a are shown to be located on the side of the fabric opposite the pins of pin bonding rolls 50. While not necessary, this reversal may be advantageous in obtaining a tenacious bonding of the fabric.

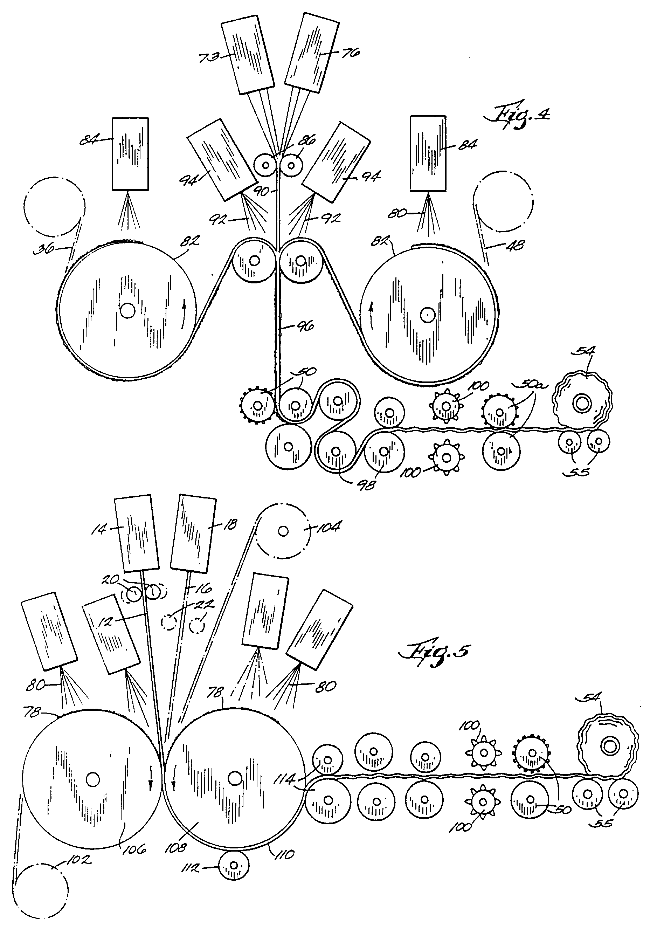

Shown in Fig. 5 is apparatus for practicing another embodiment of the method of the invention. Here again, similar to the apparatus shown in Fig. 1, extrusion dies 14 and 18 are shown for producing elastomeric filaments 12 and non-elastic filaments 16. Both the elastomeric filaments 12 and the non-elastic filaments 16 may be passed through respective feed roll sets 20 and 22. Simultaneously, layers 78 of melt blown fibers 80 are formed on two oppositely rotating accumulating rolls 106 and 108. In this embodiment, however, a prefabricated web 102, of any of the materials listed above in connection with prefabricated web 36, may be laid beneath one of the fibrous layers 78. In addition, another prefabricated web 104, also of any of the materials listed above in connection with prefabricated web 36, may applied between the other fibrous layer 78 of melt blown polymeric fibers and the filamentary curtain formed by elastomeric filaments 12 and non-elastic filaments 16. All of these layers are then fed into the nip between the two accumulating rolls 106 and 108, thereby joining all of the above indicated layers, webs and curtains to form a tensioned, coherent, unified, elasticized fabric 110. This fabric 110 then passes through the nip between a pressure roll 112 and one of the accumulating rolls 108, and then between a pair of temperature controlled feed rolls 114. Thereafter, the tension on the fabric is released, relaxing the fabric and thereby forming corrugations, wrinkles or gathers in the melt blown fibrous layer or layers 78 and kinks, curls and undulations in the non-elastic continuous filaments 16, as the fabric is accumulated by two-drum winder 55 about the final roll 54.

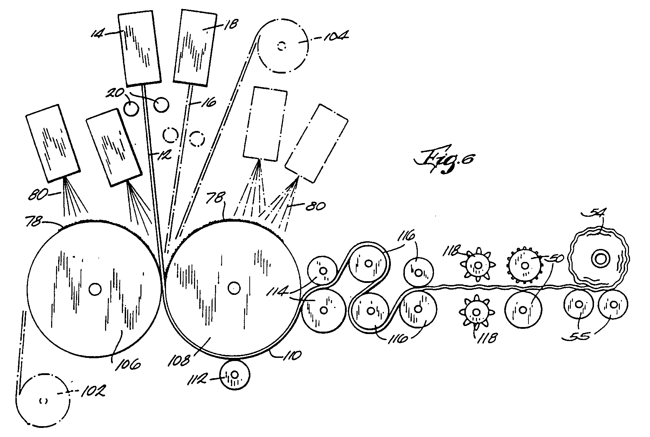

Fig. 6 shows a modification to the embodiment practiced in Fig. 5. The apparatus in Fig. 6 arrives at the same fabric 110 as referred to in Fig. 5, except that the elastomeric filaments 12 and non-elastomeric filaments 16 are not subjected to tension prior to entering the nip between accumulating rolls 104 and 108. This can be seen by the fact that the feed roll sets 20 and 22 are open, and do not bear upon the respective filamentary curtains. Thereafter, however, after the feed rolls 114, the fabric 110 is subjected to tension by a set of differential velocity draw or stretch rolls 116, which stretch the elastomeric filaments 12 and molecularly orient at least a portion of the fibers of the melt blown fibrous layers 78. Thereafter, again, the fabric is relaxed, thereby forming corrugations, wrinkles or gathers in the melt blown fibrous layers 78. Alternatively, or in addition, the fabric may be subjected to incremental elongation by incremental stretch rolls 118.

In another alternative to the embodiment shown practiced in Fig. 5, Fig. 7 shows a single accumulator roll 108, about which the single layer 78 of polymeric fibers 80 is applied in addition to elastomeric filaments 12 and non-elastic filaments 16. Also, optionally, a prefabricated web 104 may be applied between the fibrous layer 78 and the filamentary curtain formed by the filaments 12, 16. The fabric 120 thus formed is subjected thereafter to stretching by means of differential velocity draw or stretch rolls 116, and optionally corrugated rolls 118 before being pin bonded by pin bonding rolls 50 as referred to above. Thereafter, as usual, the fabric is relaxed and permitted to form its corrugations, gathers and so on.

In another embodiment, any one or all of the continuous filaments 12, 16, 72, 74 referred to herein are replaced by a cross-laid laminate of nonrandom-laid continuous filaments, prepared by a machine as disclosed in Sabee '064, incorporated hereinabove. According to the disclosure of that patent, at least one curtain of continuous filaments oriented in a first direction is joined to another curtain of continuous filaments oriented in a second direction transverse to the first direction. The cross-laid laminate may be additionally stabilized by the deposition of melt blown fibers as disclosed therein. Moreover, any reference to a prefabricated web 36, 48, 62, 102, 104 should be taken to optionally include a pre-fabricated web of this cross-laid laminate.

While the method and apparatus hereinbefore described is effectively adapted to fulfill the aforesaid objects, it is to be understood that the invention is not intended to be limited to the specific preferred embodiment of the method of forming elasticized fabric with continuous filaments set forth above. Rather, it is to be taken as including all reasonable equivalents within the scope of the following claims.

## Claims

1. A process for producing an elasticized fabric comprising elastomeric continuous filaments, said process characterized by the steps of:
a. forming one or more arrays of continuous filaments in a substantially predetermined non-random orientation, at least some of said filaments being relatively elastomeric and some of said filaments being elongatable but relatively non-elastic;
b. forming one or more fibrous webs of melt-blown fibers;
c. joining together said elastomeric filaments, and said one or more fibrous webs, thereby stabilizing said filaments in their predetermined laydown orientation to form a stabilized web;
d. elongating said stabilizing web, thereby stretching said elastomeric filaments, and molecularly orienting at least a portion of the fibers of said fibrous web, thereby forming a tensioned, elongated, elasticized fabric; and
e. relaxing said tensioned, elongated, elasticized fabric, thereby forming a gathered, elasticized fabric.

2. A process as recited in claim 1, wherein at least some of said melt-blown fibres are elastomeric or non-elastic but elongatable.

3. A process as recited in claim 1 or 2 wherein said elongating step includes feeding said stabilized web through two or more differential velocity draw or stretch rolls thereby stretching said elastomeric filaments, and molecularly orienting at least a portion of the fibers of said fibrous web.

4. A process as recited in claim 1, 2 or 3 wherein said joining step includes feeding said stabilized web through a pair of thermal pin bonding rolls to form a coherent tensioned elasticized fabric, bonded with autogenous bonds.

5. A process as recited in claim 1, 2, 3 or 4 wherein said non-elastic filaments are molecularly oriented.

6. A process as recited in claim 1 or 2 wherein said elongating step includes feeding said stabilized web through two or more sets of differential velocity draw or stretch rolls, thereby additionally stretching said elastomeric continuous filaments, and molecularly orienting at least a portion of the fibers comprising said at least one fibrous layer of polymeric fibers.

7. A process as recited in any one of claims 1 to 5 wherein adhesive fibers are deposited onto at least one side of said elastomeric filaments, onto at least one side of said non-elastic filaments, onto at least one side of said one or more fibrous webs, and into the nip or a pair of nip rolls.

8. A process as recited in claim 7 wherein said elongating step includes feeding said stabilized web including said adhesive fibers through two or more sets of differential velocity draw or stretch rolls, thereby additionally stretching said elastomeric continuous filaments, and molecularly orienting at least a portion of the fibers comprising said at least one fibrous layer of polymeric fibers.

9. A process as recited in claim 8 further comprising, after said elongating step, feeding said stabilized web including said adhesive fibers through a pair of thermal pin bonding rolls to form a coherent tensioned elasticized fabric, bonded with autogenous bonds.

10. A non-woven gathered, elasticised fabric characterized by:
a multiplicity of continuous non-random laid filaments at least partially of an elastomeric polymer, oriented substantially longitudinally and partially of non-elastic but elongatable polymer, said non-elastic filaments having curls and undulations
a multiplicity of melt blown fibers deposited on said longitudinal continuous filaments, said melt blown fibers forming bonds at least at some of their intersections with said longitudinal filaments to thereby stabilize and fix said longitudinal filaments in the substantially longitudinal orientation to form a stabilized web having wrinkles or gathers formed therein; and
at least one prefabricated web joined to said stabilized web.

11. A non-woven fabric according to claim 10, wherein at least some of said melt blown fibers are elastomeric or non-elastic but elongatable.

12. A non-woven fabric according to claim 10 or 11 wherein at least some of said melt blown fibers are adhesive fibers.

## Patentansprüche

1. Verfahren zur Herstellung eines elastischen Gewebes mit elastomeren Endlosfäden, wobei der Prozeß gekennzeichnet ist durch die Schritte:
a. des Bildens eines oder mehrerer Gitter von Endlosfasern in einer im wesentlichen vorherbestimmten, nicht wahllosen Ausrichtung, wobei mindestens einige der Fäden relativ elastomer sind und einige der Fäden dehnbar, aber relativ nicht-elastisch sind;
b. des Bildens einer oder mehrerer Faserbahnen aus schmelzgeblasenen Fasern;
c. des Verbindens der elastomeren Fäden mit der oder den Faserbahnen, wodurch die Fäden in ihrer vorherbestimmten Ablageausrichtung stabilisiert werden, um eine stabilisierte Bahn zu bilden;
d. des Dehnens der stabiiisierten Bahn, wodurch die elastomeren Fäden gestreckt werden, und des molekularen Ausrichtens mindestens eines Abschnittes der Fasern der Faserbahn, wodurch ein gestrafftes, gedehntes, elastisches Gewebe erzeugt wird; und
e. des Entspannens des gestrafften, gedehnten, elastischen Gewebes, wodurch ein gerafftes, elastisches Gewebe gebildet wird.

2. Verfahren nach Anspruch 1, wobei mindestens einige der schmelzgeblasenen Fasern elastomer oder nicht-elastisch, aber dehnbar sind.

3. Verfahren nach Anspruch 1 oder 2, wobei der Dehnungsschritt das Durchfuhren der stabilisierten Bahn durch zwei oder mehrere sich mit unterschiedlicher Geschwindigkeit drehende Zieh- oder Dehnwalzen umfaßt, wodurch die elastomeren Fäden gedehnt werden, und mindestens ein Abschnitt der Fasern der Faserbahn molekular ausgerichtet wird.

4. Verfahren nach Anspruch 1, 2 oder 3, wobei der Schritt des Verbindens das Durchführen der stabilisierten Bahn durch ein Paar Wärmenadelklebewalzen umfaßt, um ein zusammenhängendes, gestrafftes elastisches Gewebe zu schaffen, welches mit autogenem Klebstoff zusammengeklebt ist.

5. Verfahren nach Anspruch 1, 2, 3 oder 4, wobei die nicht-elastischen Fasern molekular ausgerichtet sind.

6. Verfahren nach Anspruch 1 oder 2, wobei der Schritt des Dehnens das Durchführen der stabilisierten Bahn durch zwei oder mehrere Gruppen von sich mit unterschiedlicher Geschwindigkeit drehenden Zieh- oder Dehnwalzen umfaßt, wodurch die elastomeren Endlosfasern zusätzlich gedehnt werden, und das molekulare Ausrichten mindestens eines Abschnittes der Fasern, umfassend mindestens eine Faserschicht von polymeren Fasern.

7. Verfahren nach einem der Ansprüche 1 bis 5, wobei Klebefasern auf mindestens eine Seite der elastomeren Fäden, auf mindestens eine Seite der nicht-elastischen Fäden, auf mindestens eine Seite der einen oder mehreren Faserbahnen und in eine Quetschwalze oder ein Paar von Quetschwalzen abgelegt werden.

8. Verfahren nach Anspruch 7, wobei der Schritt des Dehnens das Durchführen der stabilisierten Bahn einschließlich der Klebefasern durch zwei oder mehrere Gruppen von sich mit unterschiedlicher Geschwindigkeit drehenden Zieh- oder Dehnwalzen umfaßt, wodurch die elastomeren Endlosfasern zusätzlich gedehnt werden, und das molekulare Ausrichten mindestens eines Abschnittes der Fasern, umfassend mindestens eine Faserschicht aus polymeren Fasern.

9. Verfahren nach Anspruch 8, weiters umfassend, nach dem Schritt des Dehnens, das Durchführen der stabilisierten Bahn einschließlich der Klebefasern durch ein Paar Wärmenadelklebewalzen, um ein zusammenhängendes, gestrafftes elastisches Gewebe zu schaffen, welches mit autogenem Klebstoff zusammengeklebt ist.

10. Gerafftes, elastisches Vliesgewebe, gekennzeichnet durch:
eine Vielzahl an nicht willkürlich angeordneten Endlosfasern, die zumindest teilweise aus einem elastomeren Polymer bestehen, die im wesentlichen der Länge nach ausgerichtet sind und teilweise aus nicht elastischem, aber dehnbarem Polymer bestehen, wobei die nicht elastischen Fäden Kräusel und Bausch aufweisen;
eine Vielzahl an schmelzgeblasenen Fasern, die auf die länglichen Endlosfäden abgelegt werden, wobei die schmelzgeblasenen Fasern Klebeverbindungen mit mindestens einigen ihrer Schnittstellen mit den länglichen Fäden bilden, um dadurch die länglichen Fäden in einer im wesentlichen länglichen Ausrichtung zu stabilisieren und zu fixieren, um eine stabilisierte Bahn mit darin ausgebildeten Falten oder Kräuseln zu bilden; und
mindestens eine vorfabrizierte Bahn, die mit der stabilisierten Bahn verbunden wird.

11. Vliesgewebe nach Anspruch 10, wobei mindestens einige der schmelzgeblasenen Fasern elastomer oder nicht elastisch, aber dehnbar sind.

12. Vliesgewebe nach Anspruch 10 oder 11, wobei mindestens einige der schmelzgeblasenen Fasern Klebefasern sind.

## Revendications

1. Procédé pour produire un tissu élastifié comprenant des filaments élastomères continus, ledit procédé étant caractérisé par les étapes consistant à :
a. former un ou plusieurs groupements de filaments continus dans une orientation non aléatoire sensiblement prédéterminée, au moins certains desdits filaments étant relativement élastomères, et certains desdits filaments pouvant être allongés mais étant relativement non élastiques ;
b. former une ou plusieurs nappes fibreuses de fibres soufflées par fusion ;
c. réunir les uns aux autres lesdits filaments élastomères, et lesdites une ou plusieurs nappes fibreuses, de façon à stabiliser ainsi lesdits filaments dans leur orientation de dépôt prédéterminée afin de former une nappe stabilisée ;
d. allonger ladite nappe stabilisée, de façon à étirer ainsi lesdits filaments élastomères, et orienter moléculairement au moins une partie des fibres de ladite nappe fibreuse, de façon à former ainsi un tissu élastifié allongé tendu ; et
e. relâcher ledit tissu élastifié allongé tendu de façon à former ainsi un tissu élastifié compacté.

2. Procédé selon la revendication 1, dans lequel au moins une partie desdites fibres soufflées par fusion sont élastomères ou non élastiques mais allongeables.

3. Procédé selon la revendication 1 ou 2, dans lequel ladite étape d'allongement comprend la délivrance de ladite nappe stabilisée à travers deux ou plusieurs rouleaux d'étirement ou de tirage à vitesse différente, de façon à étirer ainsi lesdits filaments élastomères, et à orienter moléculairement au moins une partie des fibres de ladite nappe fibreuse.

4. Procédé selon la revendication 1, 2 ou 3, dans lequel ladite étape de réunion comprend la délivrance de ladite nappe stabilisée à travers une paire de rouleaux de collage thermique à broche afin de former un tissu élastifié tendu cohérent, collé avec des liaisons autogènes.

5. Procédé selon la revendication 1, 2, 3 ou 4, dans lequel lesdits filaments non élastiques sont orientés moléculairement.

6. Procédé selon la revendication 1 ou 2, dans lequel ladite étape d'allongement comprend la délivrance de ladite nappe stabilisée à travers deux ou plusieurs jeux de rouleaux d'étirement ou de tirage à vitesse différente, de façon à étirer ainsi additionnellement lesdits filaments continus élastomères, et à orienter moléculairement au moins une partie des fibres constituant la ou lesdites couches fibreuses de fibres polymères.

7. Procédé selon l'une quelconque des revendications 1 à 5, dans lequel des fibres adhésives sont déposées sur au moins un côté desdits filaments élastomères, sur au moins un côté desdits filaments non élastiques, sur au moins un côté de la ou desdites nappes fibreuses, et dans l'emprise d'une paire de rouleaux de pincement.

8. Procédé selon la revendication 7, dans lequel ladite étape d'allongement comprend la délivrance de ladite nappe stabilisée comprenant lesdites fibres adhésives à travers deux ou plusieurs jeux de rouleaux d'étirement ou de tirage à vitesse différente, de façon à ainsi étirer additionnellement lesdits filaments continus élastomères, et à orienter moléculairement au moins une partie des fibres constituant la ou lesdites couches fibreuses de fibres polymères.

9. Procédé selon la revendication 8, comprenant de plus, après ladite étape d'allongement, la délivrance de ladite nappe stabilisée comprenant lesdites fibres adhésives à travers une paire de rouleaux de collage thermique à broche afin de former un tissu élastifié tendu cohérent, collé avec des liaisons autogènes.

10. Tissu élastifié compacté non tissé, caractérisé par :
une multiplicité de filaments continus déposés de façon non aléatoire, au moins partiellement en un polymère élastomère, orientés sensiblement longitudinalement et partiellement en un polymère non élastique mais allongeable, lesdits filaments non élastiques comportant des boucles et des ondulations ;
une multiplicité de fibres soufflées par fusion déposées sur lesdits filaments continus longitudinaux, lesdites fibres soufflées par fusion formant des liaisons au moins en certaines de leurs intersections avec lesdits filaments longitudinaux de façon à stabiliser et à fixer par conséquent lesdits filaments longitudinaux dans l'orientation sensiblement longitudinale afin de former une nappe stabilisée comportant des amas ou des fronces formés dans celle-ci ; et
au moins une nappe préfabriquée réunie à ladite nappe stabilisée.

11. Tissu non tissé selon la revendication 10, dans lequel au moins certaines desdites fibres soufflées par fusion sont élastomères ou non élastiques mais allongeables.

12. Tissu non tissé selon la revendication 10 ou 11, dans lequel au moins certaines desdites fibres soufflées par fusion sont des fibres adhésives.
